# EUROPEAN PATENT APPLICATION

(11) **EP 4 804 427 A1**
(43) Date of publication of application: **09.09.2026**
(21) Application number: 25225728.2
(22) Date of filing: 19.12.2025
(51) Int. Cl.: H04B 10/2581

(54) **GENERATING ENCIRCLED FLUX (EF) COMPLIANT SIGNALS IN FIBER OPTIC LINKS**

(30) Priority: 07.03.2025 US 202519073753
(71) Applicant: Viavi Solutions Inc., Chandler, AZ 85286 (US)
(72) Inventor: WILMERS, Julian Johannes, 72585 DE Riederich (DE)
(74) Representative: Murgitroyd & Company

(57) **Abstract**

According to examples, systems and methods for taking a non-compliant fiber optic signal and generating an encircled flux compliant fiber optic signal are provided. An example includes a light source to emit an optical signal through a first fiber, and a second fiber, separated by an air gap from the first fiber, to capture the optical signal upon the optical signal propagating the air gap. The optical signal is to disperse during propagation through the air gap to create an expanded optical signal for capture by the second fiber. The expanded optical signal is distributed to one or more output fibers via a coupler, and adjusting the one or more output fibers to achieve EF compliance includes utilizing a fiber bending apparatus to bend the one or more output fibers.

## Description

### TECHNICAL FIELD

This patent application relates generally to testing of communication networks, and more specifically, to taking an encircled flux (EF) non-compliant signal and generating an EF compliant signal.

### BACKGROUND

A fiber optic communication network may include one or more optical components. Examples may include optical connectors, optical splices, optical couplers, and optical switches. These optical components may be coupled via use of one or more fiber optic cables. A fiber optic cable may include one or more optical fibers to transmit optical signals from a source to a destination.

It may be appreciated that when emitting or distributing signals via one or more channels, it may be necessary to ensure that signal transmission requirements are met. Furthermore, in some instances, it may be necessary to test components and cables of a fiber optic communication network to ensure proper operation. Testing may be performed prior to installation or during operation.

To ensure accurate and repeatable measurements during testing, a "launch condition" of a light source may be determined. Encircled flux (EF) is a metric that defines the launch conditions for an optical fiber. Unfortunately, due to variance between different multimode test sources and reference cables, EF compliance cannot necessarily always be ensured by current reference methods.

### SUMMARY

The invention is defined in the claims.

### BRIEF DESCRIPTION OF DRAWINGS

Features of the present disclosure are illustrated by way of example and not limited in the following figures, in which like numerals indicate like elements. One skilled in the art will readily recognize from the following that alternative examples of the structures and methods illustrated in the figures can be employed without departing from the principles described herein.
Figure 1 illustrates an arrangement of a single mode fiber optic cable, according to examples described herein.
Figure 2 illustrates a configuration of a multimode fiber optic cable, according to examples described herein.
Figures 3A-3B illustrate an optical signal transfer via a fiber in an underfilled launch condition, according to examples described herein.
Figures 4A-4B illustrate an optical signal transfer via a fiber in an overfilled launch condition, according to examples described herein.
Figures 5A-5B illustrate an optical signal transfer via a fiber in a compliant launch condition, according to examples described herein.
Figures 6A-6D illustrate various aspects of a plurality of systems and configurations to take an encircled flux (EF) non-compliant fiber optic signal and generate an EF compliant fiber optic signal, according to examples described herein.
Figure 7 illustrates aspects of a system to distribute an overfilled fiber optic signal into multiple fibers, according to examples described herein.
Figure 8 illustrates a system for converting of multiple overfilled fiber optic signals in multiple output fibers to EF compliant signals, according to examples described herein.
Figure 9 illustrates various aspects of a system configured to take an EF non-compliant fiber optic signal and generate an EF compliant fiber optic signal, according to examples described herein.
Figure 10 illustrates a method for taking an EF non-compliant fiber optic signal and generating an EF compliant fiber optic signal, according to examples of the present disclosure.

### DETAILED DESCRIPTION

For simplicity and illustrative purposes, the present disclosure is described by referring mainly to examples thereof. In the following description, details are set forth in order to provide an understanding of the present disclosure. It will be readily apparent however, that the present disclosure may be practiced without limitation to these details. In other instances, some methods and structures have not been described in detail so as not to unnecessarily obscure the present disclosure.

Throughout the present disclosure, the terms "a" and "an" are intended to de at least one of a particular element. As used herein, the term "includes" means includes but not limited to, the term "including" means including but not limited to. The term "based on" means based at least in part on.

Data centers enable sharing of data and content and provide storage and backup for redundancy, and typically house compute and storage resources for applications, data, and content. A data center typically includes various electronic equipment to support network communication(s).

The electronic equipment of a data center typically connects to wireline networks, which may be comprised of fiber optic cables and coaxial cables. The sharing may take place between two data centers a few miles apart, or two data centers connected via trans-oceanic lines.

One technology that may be utilized to enable sharing across data centers is Data Center Interconnection (DCI) technology. DCI may be utilized to implement highspeed data packet transfer for two or more data centers over various distances.

It may be appreciated that data center operations may depend on a wide range of design and logistical variables. Examples of these variables may include, among others, a location of the data center(s), distance between data centers, bandwidth, cost, and capacities of local service providers. Furthermore, it may be appreciated that, in many instances, fiber optic cables are essential for facilitating data center communications.

Fiber optic cables typically support superior transmission speeds over longer distances (e.g., when compared to copper cabling). As a result, fiber optic cables have become a primary means for connecting data centers.

In many cases, a fiber optic cable may contain one or more glass strands, wherein each of the glass strands may be enclosed in a protective coating (or "cladding"). These glass strands are typically thin, in the order to one hundred (100) microns (µm) in diameter. Typically, these glass strands may be bundled together and enclosed within an outer jacket.

Each fiber may comprise a glass core that may transmit fiber optic signals (e.g., at specific wavelengths). These fiber optic signals are encoded with data and launched into the fiber core by transmitters at one end of the fiber cable. The light pulses are propagated via a glass core to receivers that may decode the light pulses into digital data.

Fiber optic cables may come in multiple types. For example, a first type of fiber optic cable may be a "single mode" fiber optic cable. In a single mode fiber optic cable, light may travel in a single path a length of the fiber optic line. Typically, single mode fiber optic cables do not offer any limit on modal bandwidth(s), and have a relatively smaller core (e.g., approximately ten (10) microns (µm) in diameter). Also, transmitting fiber optic signals in one mode also allows single mode fiber optic cables to implement a range of wavelengths. By way of example, single mode fibers may use several wavelengths, typically in the range of twelve hundred seventy (1270) to sixteen hundred ten (1610) nanometer (nm) wavelengths.

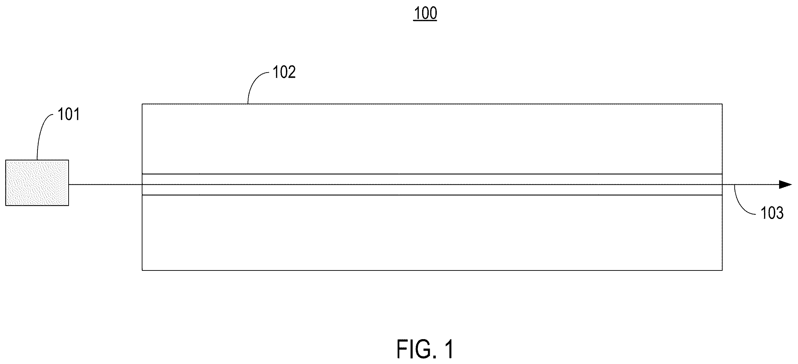

Figure 1 illustrates an optical arrangement 100 of a single mode fiber optic cable, according to examples described herein. In some examples, a light source 101 may emit a (single) fiber optic signal 103 through the single mode fiber optic cable 102.

A second type of fiber optic cable may be a "multimode" fiber optic cable. Multimode fiber optic cables typically have cores with larger diameters (e.g., approximately fifty (50) microns (µm) or sixty-two point five (62.5) micron (µm)). A multimode fiber optic cable may transmit light in multiple paths. By way of example, multimode fiber optic cables may typically transmit at eight hundred fifty (850) and thirteen hundred (1300) nanometer (nm) wavelengths.

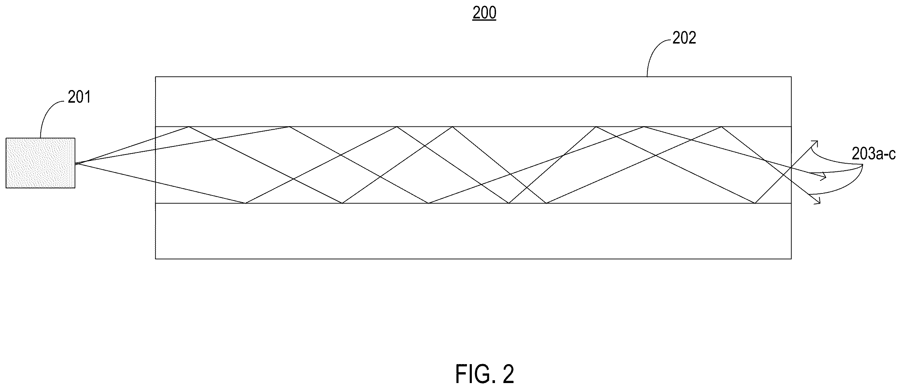

Figure 2 illustrates a configuration 200 of a multimode fiber optic cable, according to examples described herein. In some examples, a light source 201 may emit a (multiple) fiber optic signals 203a-203c through the multimode mode fiber optic cable 202.

Typically, and as used herein, a "data rate" may measure how much data a fiber optic cable may transmit in a given amount of time. Data rates may typically be measured in megabits per second (Mb/s) or gigabits per second (Gb/s). So, at a signal rate per lane of one hundred (100) Gb/s, an 8-fiber multimode fiber optic cable can support a data rate of four hundred (400) Gb/s, with four fibers transmitting at one hundred (100) Gb/s and four fibers receiving at one hundred (100) Gb/s.

An amount of data that a fiber optic cable may send may depend on multiple factors. Examples of these factors may include a type of the fiber, an application or setting in which the fiber may be deployed, and associated equipment that the fiber may be functioning with.

In some instances, it may be necessary to split an optical signal into multiple fiber optic channels. In particular, in some instances, an optical signal may be required to be sent to multiple destinations, via the multiple channels. In such instances, a "splitter" or "coupler" may be employed to divide one or more optical signals into multiple optical signals. Typically, a coupler may utilize a waveguide to split an incoming fiber optic signal into multiple signals, and may distribute the multiple fiber optic signals (evenly) among various channels, or may send different fiber optic signals to different channels. An example of such a coupler may be a Planar Waveguide Circuit (PLC) fiber optic splitter or Planar Waveguide Circuit (PLC) coupler.

It may be appreciated that when emitting or distributing signals via one or more channels, it may be necessary to ensure that signal transmission requirements are met. Specifically, it may be necessary to ensure that a signal is emitted or distributed with sufficient transmission integrity, and to avoid unwanted transmission loss or variation.

In order to ensure that the signal is being transmitted properly, the fiber optic cable may be tested for transmission characteristics. For example, during testing of a fiber, it may be necessary to ensure that signal transmission of the signal is uniform and proportionate.

For these reasons, a fiber may typically be tested during manufacture (i.e., prior to deployment), and/or after deployment in the field (e.g., in a data center) to ensure that propagation and distribution of light through a fiber channel (i.e., a fiber) is proper. It may be appreciated that if such standards and criteria (via testing) are not implemented, testing measurements may be excessively varied (i.e., unusable) or inaccurate.

To ensure accurate and repeatable measurements during testing, a "launch condition" of a light source may be determined. Specifically, a launch condition of a fiber coupled light source may represent how and where the light is distributed within the fiber. Providing appropriate launch conditions may be critical for minimizing signal loss and ensuring accurate measurements in optical fiber systems.

Encircled flux (EF) is a metric that defines the launch conditions on multimode optical fiber. In some instances, EF may represent a ratio of total optical power within a multimode fiber core to an amount of optical power existing the fiber at a particular radius. In some instances, optical power may be measured at one or more different radii to determine how optical power may be distributed within the multimode fiber core.

It may be appreciated that, in some instances, EF may be significant contributor to variations in loss measurements. Accordingly, EF may be utilized to define whether or not a launch condition (i.e., associated with a particular transmitter) may be proper.

Since it may be desirable to minimize an amount of uncertainty, or error, in a measurement, predefined EF conditions may be implemented to reduce measurement uncertainty in optical fiber cable measurements. Accordingly, optical fiber power loss testers are now typically required meet EF compliance standards to reduce measurement uncertainty in link loss measurements.

A transmission via a fiber optic cable may not be EF compliant under various conditions, and for various reasons. A first condition where a transmission may not be EF compliant may be a condition where only lower-order modes nearest to a fiber core may carry an optical signal. This may be referred to an "underfilled launch condition."

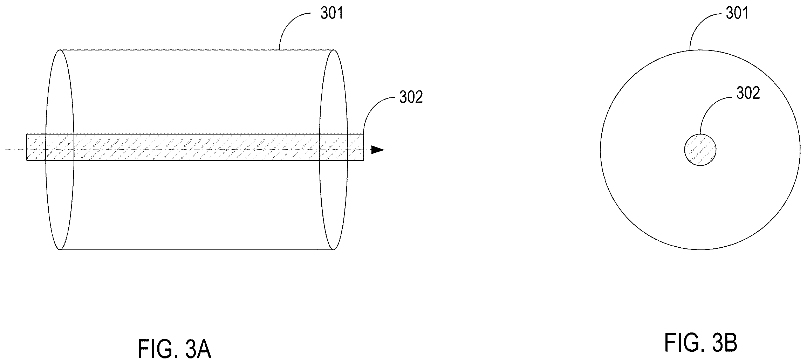

When a fiber optic cable may be underfilled, this may typically mean that the fiber optic core may be filled with light, while the outer regions may carry little to no light. Figures 3A-3B illustrate an optical signal transfer via a fiber in an underfilled launch condition, according to examples described herein. Specifically, Figure 3A illustrates a side view of a fiber 301 through which an optical signal 302 (e.g., a laser) may be transmitted. Figure 3B illustrates a cross-sectional view of the fiber 301 through which the optical signal 302 may be transmitted. An example of a light source that may typically cause an underfilled launch condition may be a laser. During measurement, in an underfilled condition, measured loss values may be overly optimistic, and may not always represent realistic loss values.

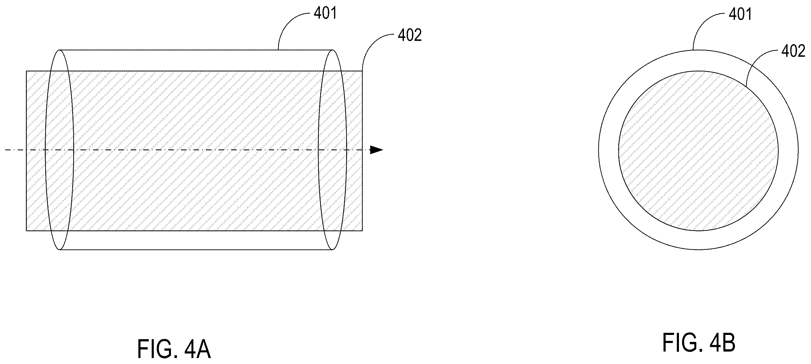

Conversely, in some instances, a condition may occur where too much power may be put into the higher order modes. This may be referred to an "overfilled launch condition." In some instances, some of this (excess) power may be removed during transmission (e.g., at first connection). Figures 4A-4B illustrate an optical signal transfer via a fiber in an overfilled launch condition, according to an example. Specifically, Figure 4A illustrates a side view of a fiber 401 through which an optical signal 402 (e.g., a laser) may be transmitted. Figure 4B illustrates a cross-sectional view of the fiber 401 through which the optical signal 402 may be transmitted. An example of a light source that may (typically) cause an underfilled launch condition may be a light-emitting diode (LED). In many instances, an overfilled condition may result in measuring unrealistically high loss values.

In some instances, a condition may occur where an appropriate range of power in one or more modes may be transmitted. This may be referred to a "compliant" launch condition. That is, in some examples, an EF compliant launch may put an appropriate and/or desirable amount of light into higher and lower order modes.

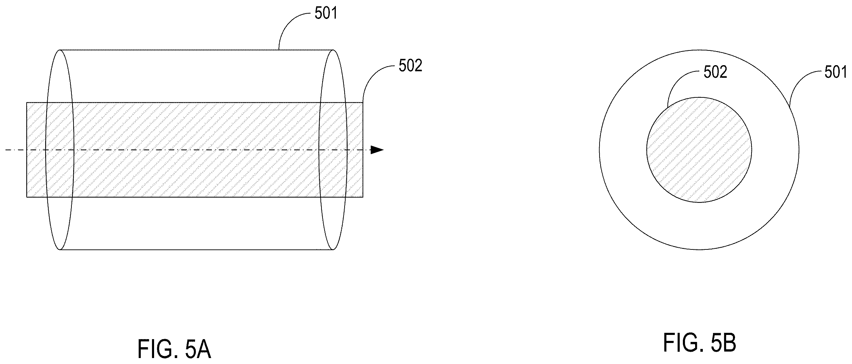

A compliant launch condition may, in some instances, be achieved by setting and implementing conditions that may limit over-fill and under-fill conditions. Furthermore, in some instances, EF compliant test standards may be implemented to test a link according to the EF compliance. Figures 5A-5B illustrate an optical signal transfer via a fiber in a compliant launch condition, according to examples described herein. Specifically, Figure 5A illustrates a side view of a fiber 501 through which an optical signal 502 (e.g., a laser) may be transmitted. Figure 5B illustrates a cross-sectional view of the fiber 501 through which the optical signal 502 may be transmitted. By ensuring an EF compliant launch, increased loss values may be detected when an (actual) problem may be present (e.g., with a cable, a connector, etc.).

It may be appreciated that ensuring an EF compliant launch may be difficult to achieve under certain circumstances. One such circumstance may be where a light source may not be configured to or able to provide appropriate power when splitting an incoming fiber optic signal into multiple signals and distributing the multiple fiber optic signals among various channels. For example, in the case of a laser source, the fiber optic signal may typically be underfilled, and therefore the fiber optic signals upon being split (e.g., via a PLC coupler) may also be underfilled. Indeed, achieving EF-compliance is especially relevant for multi-fiber systems, such as a multi-fiber push on (MPO) fiber connectors. In these situations, EF compliance may need to be achieved per fiber, which may be difficult in multi-fiber systems. By way of example, for a MPO-24 (i.e., twenty-four (24) fibers on one fiber-connector), a light source needs to be EF compliant for each of the twenty-four (24) fibers.

Unfortunately, due to variance between different multimode test sources and reference cables, EF compliance may not necessarily always be ensured by current reference methods. Ideally, an EF-compliant test method may have a way to control launch condition(s) so that an output launch that may be exiting a (reference) cable (e.g., a multimode fiber cable) may be consistent, regardless of what test source and/or reference cables may be used.

Systems and methods described herein may be implemented to take an EF non-compliant signal and generate an EF compliant signal. In some examples, the systems and methods described herein may take an underfilled, non-EF compliant fiber optic signal (e.g., for a multimode, multi-fiber) and generating an overfilled fiber optic signal. In other examples, the systems and methods described herein may take an underfilled, non-EF compliant fiber optic signal (e.g., for a multimode, multi-fiber) and generating an EF compliant fiber optic signal.

In some examples, and as discussed further below, the systems and methods may generate an overfilled fiber optic signal and/or an EF compliant fiber optic signal (e.g., a multimode, multi-fiber fiber optic signal) by implementing one or more of an air-gap, a coupler (e.g., a Planar Waveguide Circuit (PLC) coupler), and a directed bending of a transmitting fiber. In particular, in some examples, the systems and methods described herein may take an underfilled fiber optic signal and generate an overfilled fiber optic signal, and further may take the overfilled fiber optic signal and distribute the overfilled fiber optic signals into multiple fibers. In some examples, the systems and methods may enable converting of the overfilled fiber optic signals in multiple fibers into EF compliant fiber optic signals as well.

As such, in some instances, the systems and methods described may provide cost-effective solutions that may require a relatively few and/or passive components to implement. For example, for a multi-mode, multi-fiber fiber optic signal (e.g., MPO-24 fiber), instead of having to provide compliance for each fiber of the multi-fiber individually, EF compliance for each of the multiple fibers of the multi-fiber may be achieved with a single adjustment.

Moreover, in some instances, this may offer a cost efficient alternative over switches, while still keeping a per-fiber output power comparable to that of traditional LEDs. Accordingly, the systems and methods described herein may eliminate a need for higher power light sources (e.g., LEDs) that may typically be used to create an overfilled fiber optic signal for multi-fiber applications.

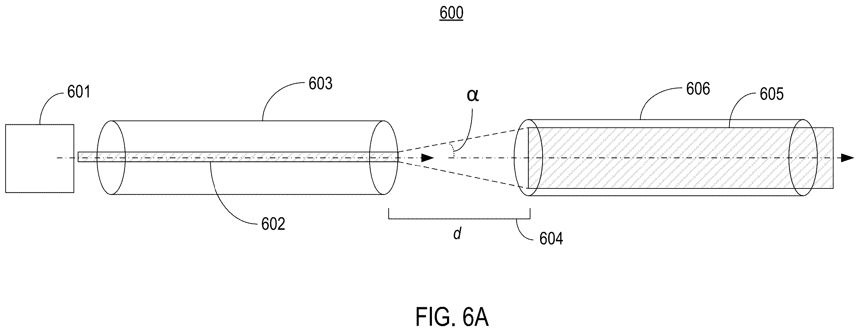

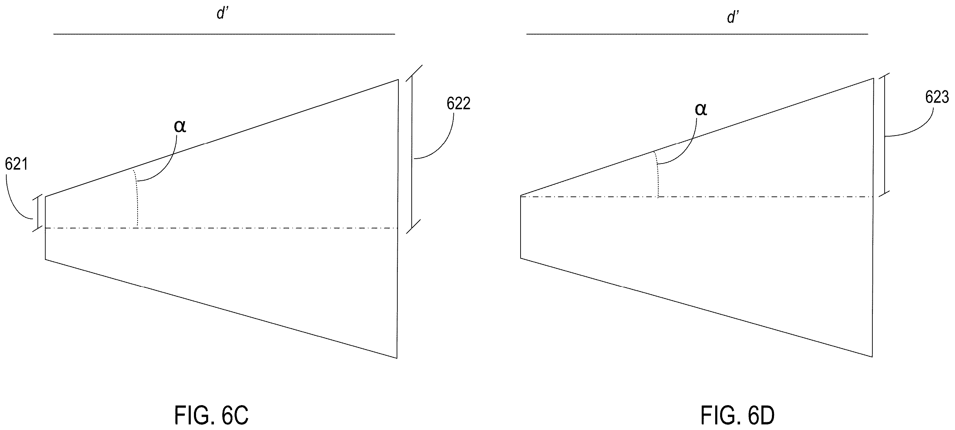

Figures 6A-6D illustrate various aspects of a plurality of systems and configurations to take an EF non-compliant fiber optic signal and generate an EF compliant fiber optic signal, according to examples described herein. Specifically, as discussed further below, some of the examples illustrated in Figures 6A-6D may implement an air gap to change a power distribution of a fiber (e.g., a multimode fiber) from an underfilled distribution into an overfilled distribution. As used herein, an "air gap" may include any distance over which an optical signal may travel in air.

Figure 6A illustrates a system 600 for taking an underfilled fiber optic signal and generating an EF compatible signal, according to an example. Figure 6A illustrates a light source 601 that emits an optical signal 602 towards a first fiber 603. In some examples, the light source 601 is a laser, and the optical signal 602 is an underfilled fiber optic signal. Furthermore, in some examples, a radius of the first fiber 603 may be fifty (50) micrometers (µm), while in other examples, a radius of the first fiber 603 may be sixty-two and one-half (62.5) micrometers (µm).

Upon traveling through the first fiber 603, the optical signal 602 may be exposed to an air gap 604. The air gap 604 may have a distance d, wherein (in some examples) the distance d may be predetermined.

In some examples, the air gap 604 may be located in between the first fiber 603 and a second fiber 606. In some examples, a radius of the second fiber 606 may be fifty (50) micrometers (µm), while in other examples, a radius of the second fiber 606 may be sixty-two and one-half (62.5) micrometers (µm).

In some examples, as the optical signal 602 may travel through the air gap 604, the optical signal 602 may disperse. Specifically, the optical signal 602 may disperse over an angle α (as shown) to create a wider circumference, so that as the optical signal 602 travels, it may create an over-filling of the optical signal 602.

In this manner, in some examples, as the optical signal 602 may travel the distance d of the air gap 604, and may approach the second fiber 606, the optical signal 602 may become an expanded signal 605 (e.g., overfilled). In some examples, the optical signal 602 may be captured by the second fiber 606, coupling in the expanded signal 605, and resulting in the expanded signal 605 (e.g., overfilled) propagating through the second fiber 606.

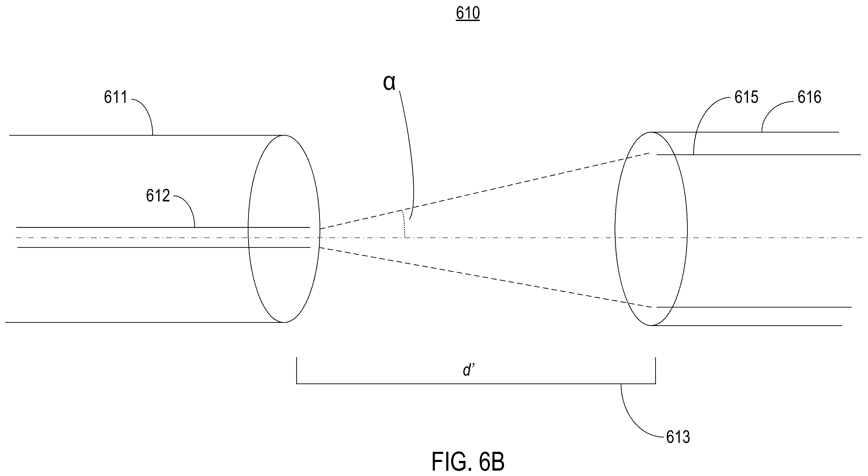

In this manner, in various examples described herein, aspects of a configuration (e.g., a distance d between a first fiber and a second fiber) may be selected to ensure that an overfilled fiber optic signal is provided to a second fiber. Figure 6B illustrates aspects of a system 610 providing a transition from an underfilled fiber optic signal to an overfilled fiber optic signal using an air gap, according to an example. Specifically, in some examples, by enabling an underfilled fiber optic signal 612 to exit a first fiber 611 (e.g., a multimodal fiber) and to travel over an air gap 613 having a distance d', the underfilled fiber optic signal 612 may be expanded and converted to an expanded fiber optic signal 615 (e.g., overfilled) when entering a second fiber 616.

In some examples, when exiting the first fiber 611, the underfilled fiber optic signal 612 may disperse at a (particular) angle α. Specifically, in some instances, a numerical aperture (NA) of the first fiber 611 may cause the underfilled fiber optic signal to disperse at the angle α. In some examples, the numerical aperture (NA) may be:$NA = sin \left(α\right)$

In some examples, the angle α may be approximately eleven point five degrees (11.5°). Also, in some examples, where a multimodal fiber may have an index-gradient, it may be assumed that (i.e., due to the under-filling) the NA may be approximately zero-point two (0.2).

Furthermore, in some examples, the angle α may enable determining of a position or angle (e.g., of the first fiber 611), and/or the distance *d*' that may be required to create a dispersed and/or expanded signal (e.g., the fiber optic signal 615). So, in some examples, the air gap 613 may be utilized to create an expanded fiber optic signal (e.g., the fiber optic signal 615). In other examples, the air gap 613 may be utilized to create an EF compliant signal (i.e., depending on the degree of dispersion and/or the distance d').

Figure 6C-6D illustrate aspects related to dispersion of an optical signal traveling over an air gap, according to an example. In some examples, similar to the examples illustrated in Figures 6A-6B, an optical signal may disperse at an angle *α*. In these examples, a first radius 621 (r₁) may represent a first radius of an optical signal exiting a first fiber (e.g., the first fiber 611), and prior to dispersion via an air gap (*d'*)*.* In some examples, the first radius 621 (r₁) may be approximately five (5) microns (µm), where an associated fiber may be filled approximately twenty percent (20%). In some examples, the NA may be approximately zero-point two (0.2).

Furthermore, a second radius 622 (r₂) may represent a radius of an (expanded) optical signal when entering a second fiber (e.g., the second fiber 616), after dispersion via an air gap. In some examples, the second radius 622 (r₂) may be approximately twenty-five (25) microns (µm). It may be appreciated that, in some examples, it may be desirable for the second radius 622 (r₂) to be larger than a particular amount. Specifically, in some examples, the distance *d'* may be selected to ensure that the second radius 622 (r₂) may provide an overfill condition (e.g., fifty (50) micrometers (µm)).

In some examples, the distance 623 (d_{diff}) may represent a difference between the second radius 622 (r₂) and the first radius 621 (r₁), wherein:${d}_{diff} = {r}_{2} - {r}_{1}$$sin \left(α\right) = NA = {d}_{diff} / d ' ,$ and$d ' = {d}_{diff} / NA .$

In some examples, the distance 623 (d_{diff}) may be approximately twenty (20) microns (µm). So, in some examples, if the distance 623 (d_{diff}) may be approximately twenty (20) microns (µm) and the numerical aperture (NA) may be zero-point two (0.2), then the air gap *d'* may be zero-point one (0.1) millimeters (mm). In some examples, it may be beneficial to provide an air gap *d*' larger than zero-point one (0.1) millimeters (mm).

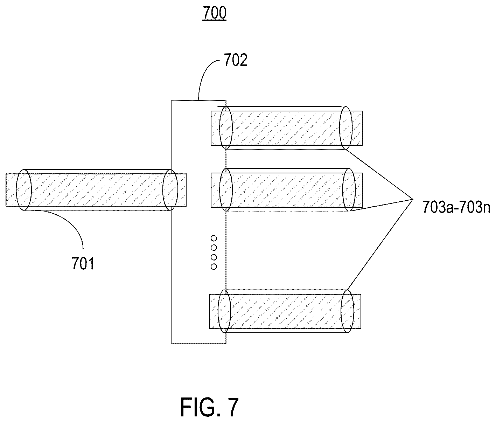

In some examples, upon utilizing an air gap to produce an expanded (e.g., overfilled) fiber optic signal (e.g., as illustrated in Figure 6B), a multimodal (MM) fiber carrying the expanded fiber optic signal may be coupled to a splitter or coupler. In some examples, the coupler may distribute the (incoming) expanded fiber optic signal into multiple fibers. In some examples, this may result in multiple output fibers carrying an overfilled fiber optic signal. Figure 7 illustrates aspects of a system 700 to distribute an overfilled fiber optic signal into multiple fibers, according to examples described herein. In some examples, a first (input) fiber 701 (e.g., a multimodal fiber) carrying an overfilled fiber optic signal may be coupled to a coupler 702. In some examples, the coupler 702 may be a Planar Waveguide Circuit (PLC) coupler. In some examples, the coupler 702 may distribute the overfilled fiber optic signal into (output) fibers 703a-703n, and thereby may produce an overfilled fiber optic signal in each of the output fibers 703a-703n.

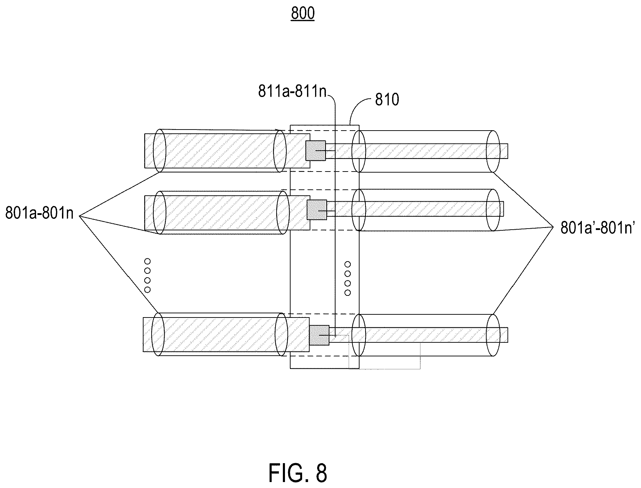

In some instances, upon generating an overfilled fiber optic signal in multiple (e.g., twenty-four (24)) output fibers, it may be desirable to ensure that each of the multiple output fibers are EF compliant. Figure 8 illustrates a system 800 for converting of multiple overfilled fiber optic signals in multiple output fibers to EF compliant signals, according to examples described herein. In some examples, an overfilled fiber optic signal for each (input portion) of multiple fibers 801a-801n may be coupled to fiber bending apparatus 810 (otherwise also referred to as "fiber bender"). In some examples, (one or more) bending components 811a-811n of the fiber bending apparatus 810 may be used to bend the multiple fibers 801a-801n to reduce overfill, and to achieve EF compliance for each fiber.

In some examples, the fiber bending apparatus may be comprised of plastic, and may include one or more holes through which one or more fibers (e.g., the multiple fibers 801a-801n) may be inserted. The fiber bending apparatus may also include one or more screw mechanisms (e.g., one for each inserted fiber) that may be used to apply pressure to a fiber to cause each fiber to bend.

It may be appreciated that, in some instances, by bending a fiber, a portion of higher order modes (i.e., that may typically be located along an outside of a signal) may be removed, resulting in an EF compliant fiber optic signal. In particular, in some instances, this may have the effect of "pushing" the signal towards a middle portion of the signal. It may be appreciated that, in some instances, this may cause a signal to lose some power.

Furthermore, in some examples, the fiber bending apparatus may be coupled to a power meter (e.g., an EF compliance meter) that may be coupled to each fiber to measure power distribution. That is, in some examples, a fiber bending apparatus may be adjusted (e.g., turned) until the power meter may indicate EF compliance in outgoing portions 801a'-801n' of the multiple fibers.

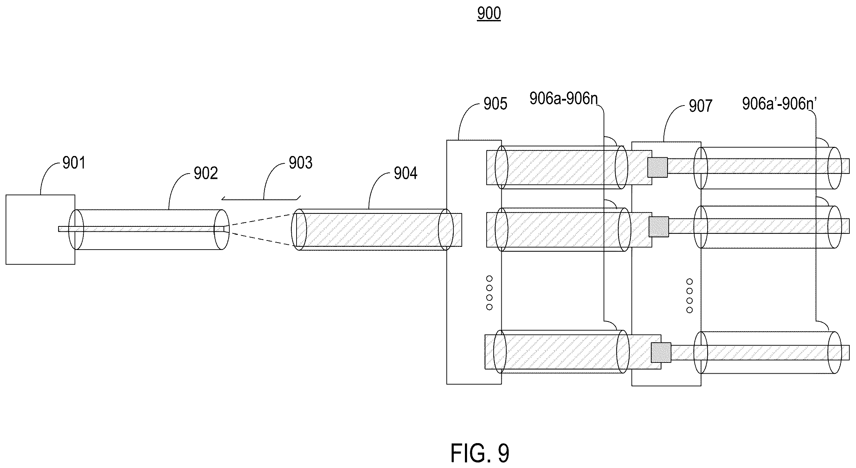

Figure 9 illustrates various aspects of a system 900 configured to take an EF non-compliant fiber optic signal and generate an EF compliant fiber optic signal, according to examples described herein. In some examples, a light source 901 (e.g., similar to the light source 601) may emit an optical signal (e.g., similar to the optical signal 602) towards a first fiber 902. In some examples, the optical signal is an underfilled fiber optic signal.

Upon traveling through the first fiber 902, the optical signal may be exposed to an air gap 903 (e.g., similar to the air gap 604). The air gap 903 may have a predetermined distance. As discussed above, in some examples, as the optical signal may travel through the air gap 903, the optical signal may disperse, creating an over-filling of the optical signal. In some examples, the optical signal may be captured by the second fiber 904, coupling in the overfilled signal, and resulting in the overfilled signal propagating through the second fiber 904.

In some examples, passing through the air gap 903 and propagating the second fiber 904, the overfilled signal may be coupled to a coupler 905 (e.g., similar to the coupler 702), such as a Planar Waveguide Circuit (PLC) coupler. In some examples, the coupler may distribute the overfilled fiber optic signal from second fiber 904 into multiple fibers 906a-906n. In some examples, this may result in the multiple fibers 906a-906n each carrying an overfilled fiber optic signal.

Furthermore, in some examples, an overfilled fiber optic signal for each (input portion) of multiple fibers 906a-906n may be coupled to fiber bending apparatus 907. As discussed above, in some examples, bending components of the fiber bending apparatus 907 may be used to bend each of the multiple fibers 906a-906n to achieve EF compliance for each fiber. In some examples, the fiber bending apparatus may include one or more screw mechanisms that may apply pressure to one or more of the multiple fibers 906a-906n to produce an EF compliant fiber optic signal(s) in output portions 906a'-906n'. In some examples, the fiber bending apparatus 907 may be coupled to a power meter to measure power distribution in each of the output portions 906a'-906n', and may be used to produce the EF compliant fiber optical signals in the output portions 906a'-906n'.

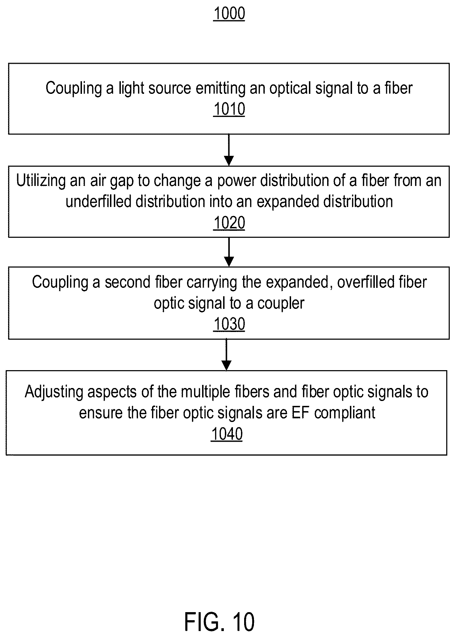

Figure 10 illustrates a method for taking an EF non-compliant fiber optic signal and generating an EF compliant fiber optic signal, according to examples of the present disclosure. The method 1000 is provided by way of example, as there may be a variety of ways to carry out the method described herein. Each block shown in Figure 10 may further represent one or more processes, methods, or subroutines, and one or more of the blocks may include machine-readable instructions stored on a non-transitory computer-readable medium and executed by a processor or other type of processing circuit to perform one or more operations described herein. In some examples, the method 1000 may be executed or otherwise performed by other systems, or a combination of systems. Furthermore, in some examples, the systems and methods described herein may include a testing device for testing conditions associated with a data center, comprising an input/output (I/O) device comprising a display, a processor, a memory to store machine readable instructions executable by the processor to capture first data associated with signal activity a communications link (e.g., a fiber optic link).

Reference is now made with respect to Figure 10. At 1010, the method may include coupling a light source emitting an optical signal to a fiber. In some examples, the light source may be a laser, and the optical signal may be an underfilled fiber optic signal.

At 1020, the method may include utilizing an air gap to change a power distribution of a fiber from an underfilled distribution into an expanded distribution. Specifically, in some examples, the method may include taking an underfilled fiber optic signal, exposing the underfilled fiber optic signal to an air gap to disperse and/or expand the underfilled fiber optic signal, and capturing an expanded, overfilled fiber optic signal in a second fiber.

At 1030, upon utilizing an air gap to produce an expanded (e.g., overfilled) fiber optic signal, the method may include coupling a second fiber carrying the expanded, overfilled fiber optic signal to a coupler, such as a Planar Waveguide Circuit (PLC) coupler. In some examples, the coupler may distribute the (incoming) expanded, overfilled fiber optic signal into multiple fibers, resulting in the multiple fibers each carrying an overfilled fiber optic signal.

At 1040, upon generating an overfilled fiber optic signal in multiple fibers, the method may include adjusting (one or more) aspects of the multiple fibers and associated (overfilled) fiber optic signals to ensure the fiber optic signals are EF compliant. In some examples, an overfilled fiber optic signal for each of multiple fibers may be coupled to fiber bending apparatus to bend each of the multiple fibers to reduce overfilling, and to achieve EF compliance for each fiber. In some examples, the fiber bending apparatus may be comprised of plastic, and may include one or more holes through which one or more fibers may be inserted. The fiber bending apparatus may also include one or more screw mechanisms (e.g., one for each inserted fiber) that may be used to apply pressure to a fiber to cause each fiber to bend, resulting in an EF compliant fiber optic signal (as discussed above). Furthermore, in some examples, the fiber bending apparatus may be adjusted (e.g., turned) until the power meter may indicate EF compliance in the multiple fibers.

In some examples, the systems and methods described herein may include a method for taking a non-compliant fiber optic signal and generating an encircled flux (EF) compliant fiber optic signal, comprising emitting, using a light source, an underfilled optical signal into a first fiber, propagating the underfilled optical signal over an air gap to generate an expanded fiber optic signal, coupling a second fiber to carry the expanded fiber optic signal, distributing the expanded fiber optic signal into one or more output fibers, wherein each of the one or more output fibers is to carry a respective expanded fiber optic signal, and adjusting the one or more output fibers to modify the respective expanded fiber optic signal to one or more EF compliant signals. In some examples, distributing the expanded fiber optic signal includes implementing a Planar Waveguide Circuit (PLC) coupler, and adjusting the one or more output fibers includes utilizing a fiber bending apparatus to bend the one or more output fibers to achieve EF compliance. Also, in some examples, adjusting the one or more output fibers further includes adjusting a degree of bend of the one or more output fibers utilizing a power meter, and wherein the fiber bending apparatus includes one or more screwing mechanisms to apply pressure to bend the one or more output fibers to produce one or more EF compliant fiber optic signals. In some examples, the light source is a laser, while in other examples, the light source is a vertical cavity surface-emitting laser (VCSEL).

In some examples, the systems and methods described herein may include a non-transitory computer readable medium configured to store program code instructions, when executed by a processor, cause the processor to perform steps comprising emit, using a light source, an underfilled optical signal into a first fiber, propagate the underfilled optical signal over an air gap to generate an expanded fiber optic signal, couple one or more output fibers to carry the expanded fiber optic signal, and adjust the one or more output fibers to modify the expanded fiber optic signal to one or more EF compliant signals. In some examples, the instructions, when executed by the processor, cause the processor to distribute the expanded fiber optic signal into the one or more output fibers, wherein each of the one or more output fibers is to carry a respective expanded fiber optic signal, wherein adjusting the one or more output fibers includes adjusting the one or more output fibers utilizing a power meter, wherein adjusting the one or more output fibers includes coupling a fiber bending apparatus to each of the one or more output fibers, an wherein adjusting the one or more output fibers further includes bending each of the one or more output fibers to achieve EF compliance for each fiber.

In some examples, the systems and methods described herein may include an apparatus, comprising a light source to emit an underfilled optical signal into a first fiber, an optical path including an air gap to propagate the underfilled optical signal over the air gap to generate an expanded fiber optic signal, a coupler to couple one or more output fibers to carry the expanded fiber optic signal, and a fiber bender to adjust the one or more output fibers to modify the expanded fiber optic signal to one or more EF compliant signals. In some examples, the each of the one or more output fibers is to carry a respective expanded fiber optic signal, and the light source is a vertical cavity surface-emitting laser, and the fiber bender includes one or more screwing mechanisms.

In some examples, the systems and methods may include an apparatus, comprising a light source to emit an optical signal through a first fiber and a second fiber, separated by an air gap from the first fiber, to capture the optical signal upon the optical signal propagating the air gap, wherein the optical signal is to disperse during propagating the air gap to create an expanded optical signal for capture by the second fiber. In some examples, the apparatus may comprise a coupler to distribute the expanded optical signal into multiple output fibers, wherein each fiber of the multiple output fibers is to carry an overfilled fiber optic signal and a power meter to enable adjusting the multiple output fibers to achieve EF compliance for each fiber of the multiple output fibers. In some examples, the apparatus may comprise a fiber bending apparatus to bend the multiple output fibers to achieve EF compliance for each fiber of the multiple output fibers, wherein the fiber bending apparatus includes one or more screw mechanisms to apply pressure to the multiple output fibers to bend. In some examples, the air gap is a predetermined distance, the air gap has a distance greater than or equal to zero-point one (0.1) millimeters (mm), and the first fiber, the second fiber, and the multiple output fibers are multi-mode (MM) fibers.

What has been described and illustrated herein is an example along with some of its variations. The terms, descriptions and figures used herein are set forth by way of illustration only and are not meant as limitations. Many variations are possible within the spirit and scope of the subject matter, which is intended to be defined by the following claims-and their equivalents-in which all terms are meant in their broadest reasonable sense unless otherwise indicated.

## Claims

1. A method for taking a non-compliant fiber optic signal and generating an encircled flux (EF) compliant fiber optic signal using an air gap, comprising:
emitting, using a light source, an underfilled optical signal into a first fiber;
propagating the underfilled optical signal over an air gap to generate an expanded fiber optic signal;
coupling a second fiber to carry the expanded fiber optic signal;
distributing the expanded fiber optic signal into one or more output fibers, wherein each of the one or more output fibers is to carry a respective expanded fiber optic signal; and
adjusting the one or more output fibers to modify the respective expanded fiber optic signal to one or more EF compliant signals.

2. The method of claim 1, wherein distributing the expanded fiber optic signal includes implementing a Planar Waveguide Circuit (PLC) coupler.

3. The method of claim 2, wherein adjusting the one or more output fibers includes utilizing a fiber bending apparatus to bend the one or more output fibers to achieve EF compliance.

4. The method of claim 3, wherein adjusting the one or more output fibers further includes adjusting a degree of bend of the one or more output fibers utilizing a power meter, and optionally wherein the fiber bending apparatus includes one or more screwing mechanisms to apply pressure to bend the one or more output fibers to produce one or more EF compliant fiber optic signals.

5. The method of any preceding claim, wherein the light source is either:
a laser, or
a light-emitting diode (LED).

6. An apparatus, comprising:
a light source to emit an underfilled optical signal into a first fiber;
an optical path including an air gap to propagate the underfilled optical signal over the air gap to generate an expanded fiber optic signal;
a coupler to couple one or more output fibers to carry the expanded fiber optic signal; and
a fiber bender to adjust the one or more output fibers to modify the expanded fiber optic signal to one or more EF compliant signals.

7. The apparatus of claim 6, wherein each of the one or more output fibers is to carry a respective expanded fiber optic signal.

8. The apparatus of claim 6 or claim 7, further comprising a power meter to adjust the one or more output fibers.

9. The apparatus of any of claims 6 to 8, wherein the light source is a vertical cavity surface-emitting laser.

10. The apparatus of any of claims 6 to 9, wherein the fiber bender includes one or more screwing mechanisms.

11. An apparatus, comprising:
a light source to emit an optical signal through a first fiber; and
a second fiber, separated by an air gap from the first fiber, to capture the optical signal upon the optical signal propagating the air gap, wherein the optical signal is to disperse during propagating the air gap to create an expanded optical signal for capture by the second fiber.

12. The apparatus of claim 11, further comprising a coupler to distribute the expanded optical signal into multiple output fibers, wherein each fiber of the multiple output fibers is to carry an overfilled fiber optic signal, and optionally wherein the first fiber, the second fiber, and the multiple output fibers are multi-mode (MM) fibers.

13. The apparatus of claim 12, further comprising a power meter to enable adjusting the multiple output fibers to achieve EF compliance for each fiber of the multiple output fibers.

14. The apparatus of claim 12, further comprising a fiber bending apparatus to bend the multiple output fibers to achieve EF compliance for each fiber of the multiple output fibers, and optionally wherein the fiber bending apparatus includes one or more screw mechanisms to apply pressure to the multiple output fibers to bend.

15. The apparatus of any of claims 12 to 14, wherein the air gap is a predetermined distance, and optionally wherein the air gap has a distance greater than or equal to zero-point one (0.1) millimeters (mm).
